(19) Europäisches Patentamt / European Patent Office / Office européen des brevets

(11) **EP 2 219 988 B1**

(12) **FASCICULE DE BREVET EUROPEEN**

(45) Date de publication et mention
de la délivrance du brevet:
**10.04.2013 Bulletin 2013/15**

(21) Numéro de dépôt: **08851881.6**

(22) Date de dépôt: **17.11.2008**

(51) Int Cl.:
***B66C 13/06*** *(2006.01)*     ***B66C 13/48*** *(2006.01)*
***G05D 19/02*** *(2006.01)*

(86) Numéro de dépôt international:
**PCT/EP2008/065696**

(87) Numéro de publication internationale:
**WO 2009/065808 (28.05.2009 Gazette 2009/22)**

(54) **DISPOSITIF ET PROCEDE DE REGULATION DU DEPLACEMENT D'UNE CHARGE SUSPENDUE**

VERFAHREN UND VORRICHTUNG ZUR STEUERUNG DER BEWEGUNG EINER AUFGEHÄNGTEN LAST

DEVICE AND METHOD FOR REGULATING THE DISPLACEMENT OF A SUSPENDED LOAD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.11.2007 FR 0759158**

(43) Date de publication de la demande:
**25.08.2010 Bulletin 2010/34**

(73) Titulaire: **Schneider Toshiba Inverter Europe SAS 27120 Pacy sur Eure (FR)**

(72) Inventeur: **STANTCHEV, Pentcho F-78112 Fourqueux (FR)**

(74) Mandataire: **Dufresne, Thierry Schneider Electric Industries SAS Service Propriété Industrielle 35 rue Joseph Monier - CS 30323 92506 Rueil-Malmaison Cedex (FR)**

(56) Documents cités:
**FR-A- 2 698 344     FR-A- 2 775 678
US-A- 5 219 420     US-A- 5 443 566
US-A- 5 806 696**

**Description**

La présente invention se rapporte à un dispositif de régulation et à un procédé de régulation du déplacement d'une charge suspendue par câbles à un chariot mobile dans un engin de levage.

Les engins de levage tels que portiques, grues ou ponts roulants comprennent habituellement un chariot qui est déplaçable sur des rails selon un axe horizontal X. Ce premier mouvement selon l'axe X est généralement appelé mouvement de direction (Trolley ou Short travel movement). Suivant le type d'engins, ces rails peuvent en plus être parfois eux-mêmes mobiles selon un axe horizontal Y perpendiculaire à l'axe X, permettant ainsi au chariot de pouvoir se déplacer suivant les axes X et Y. Ce second mouvement selon l'axe Y est généralement appelé mouvement de translation (Crane ou Long travel movement). Un dispositif de suspension de la charge est associé à des câbles qui transitent par le chariot, la longueur des câbles étant susceptible de varier de façon à pouvoir déplacer la charge selon un axe vertical Z, appelé mouvement de levage (Hoisting movement).

La manutention d'une charge par un engin de levage entraîne des balancements de la charge qu'il est évidemment souhaitable d'amortir pour effectuer en douceur et en toute sécurité le transfert de la charge et cela, dans un laps de temps le plus court possible. Ces balancements sont générés par l'accélération du ou des mouvements horizontaux du chariot selon les axes X et/ou Y, et leur fréquence d'oscillation dépend de la longueur des câbles. Il existe déjà plusieurs solutions pour diminuer automatiquement l'angle du ballant d'une telle charge suspendue.

Le document FR2698344 décrit un dispositif de régulation du transfert d'une charge suspendue qui permet d'agir sur la commande de déplacement du chariot à partir des corrections de la position du chariot et de l'angle du ballant. L'angle du ballant est mesuré périodiquement au moyen de capteurs associés au chariot et à la charge. La nécessité de mesures périodiques de l'angle du ballant entraîne l'utilisation permanente de capteurs d'angle. Or, ceux-ci sont souvent utilisés dans un environnement extérieur ou agressif tel qu'un milieu sidérurgique par exemple qui présente une température ambiante élevée. Une maintenance suivie des capteurs est donc nécessaire pour leur entretien.

Pour pallier à la présence permanente d'un capteur d'angle de ballant en phase d'exploitation, le document FR2775678 décrit un procédé de régulation comprenant une première phase initiale de modélisation ou d'identification par apprentissage d'une fonction de transfert propre à l'engin à réguler en utilisant les informations fournies par un capteur d'angle du ballant, puis une seconde phase d'exploitation dans laquelle cette fonction de transfert ainsi déterminée permet alors de réguler la charge suspendue sangs l'utilisation de capteur d'angle du ballant. Ainsi, on peut s'affranchir notamment des problèmes d'environnement et de maintenance du capteur. La mise en oeuvre d'un tel procédé reste néanmoins assez complexe à cause de l'existence de cette phase initiale de modélisation ou d'apprentissage.

Par ailleurs, le document US5443566 décrit un dispositif électronique de contrôle de ballant (ou "antisway control") qui notamment utilise comme paramètre variable d'entrée la force d'accélération du chariot, grâce à une mesure en temps réel du courant circulant dans le moteur chargé d'effectuer le mouvement horizontal du chariot. Cette mesure de courant rend plus complexe le dispositif de régulation du balancement de la charge et rend plus difficile l'implantation d'un tel dispositif dans un équipement d'automatisme physiquement éloigné du variateur de vitesse de déplacement du chariot. De plus, la valeur du courant ou du couple moteur peut dépendre du poids de la charge suspendue, alors que le ballant ne dépend pas du poids de la charge. Or comme ce poids n'est pas connu, l'utilisation d'un courant moteur dans l'algorithme de calcul du ballant peut donc entraîner des imprécisions dans la correction du ballant.

Le document US 5 219 420 décrit un procédé de commande de grue basé sur une solution de double rampe pour amortir le ballant.

C'est pourquoi l'invention a pour but de maîtriser les oscillations d'une charge suspendue lors de son transfert, en utilisant un dispositif et un procédé simple, rapide et facile à mettre en oeuvre. Elle permet de minimiser les mesures ou les prises d'information qui sont nécessaires pour effectuer le contrôle et la maitrise du ballant d'une charge.

Pour cela, l'invention décrit un dispositif de régulation du déplacement d'une charge suspendue par câbles à un chariot qui est mobile selon un premier axe horizontal dans un engin de levage, le dispositif comprenant des moyens de détermination d'une longueur des câbles de suspension de la charge et des moyens de détermination d'une information représentative d'une vitesse de déplacement du chariot selon le premier axe. Le dispositif de régulation calcule un premier angle de ballant de la charge et une vitesse dudit premier angle de ballant en utilisant uniquement ladite longueur et ladite information représentative de la vitesse de déplacement selon le premier axe comme seules variables d'entrée, et en utilisant une accélération dudit premier angle de ballant comme variable interne

Selon une caractéristique, le dispositif de régulation calcule le premier angle de ballant à l'aide d'un processus itératif utilisant la vitesse et l'accélération dudit premier angle de ballant.

Selon une caractéristique, l'information représentative de la vitesse de déplacement du chariot selon le premier axe est déterminée en utilisant une référence de vitesse qui est fournie à un variateur de vitesse pilotant le déplacement du chariot selon le premier axe. Alternativement, l'information représentative de la vitesse de déplacement du chariot selon le premier axe est déterminée en utilisant une estimation de vitesse qui est élaborée par un variateur de vitesse pilotant le déplacement du chariot selon le premier axe.

Selon une autre caractéristique, le dispositif de régulation délivre un signal de correction qui est ajouté à une consigne de vitesse pour fournir une référence de vitesse de déplacement du chariot selon le premier axe. Le signal de correction est calculé en appliquant un coefficient de correction au premier angle de ballant calculé et un coefficient de correction à la vitesse calculée du premier angle de ballant. Les coefficients de correction sont préférentiellement variables en fonction de la longueur des câbles de suspension de la charge.

Selon une autre caractéristique, le chariot est également mobile selon un second axe horizontal perpendiculaire au premier axe. Le dispositif de régulation comporte des moyens pour déterminer une information représentative d'une vitesse de déplacement du chariot selon le second axe et calcule un second angle de ballant de la charge et une vitesse dudit second angle de ballant en utilisant uniquement ladite longueur et ladite information représentative de la vitesse de déplacement selon le second axe comme seules variables d'entrée, et en utilisant une accélération dudit second angle de ballant comme variable interne.

Selon une autre caractéristique, le chariot est également mobile selon un second axe horizontal perpendiculaire au premier axe, et comprend des moyens pour déterminer une vitesse de déplacement du chariot selon le second axe. Le dispositif de régulation calcule un second angle de ballant de la charge et une vitesse dudit second angle de ballant en utilisant uniquement la longueur des câbles et la vitesse de déplacement selon le second axe comme seules variables d'entrée.

L'invention décrit également un procédé de régulation du déplacement d'une charge suspendue par câbles à un chariot qui est mobile selon au moins un axe horizontal dans un engin de levage. Le procédé de régulation est mis en oeuvre par le dispositif de régulation et comporte une étape de calcul permettant de déterminer un angle de ballant de la charge et une vitesse de l'angle de ballant en utilisant uniquement comme seules variables d'entrée une longueur des câbles de suspension de la charge et une information représentative d'une vitesse de déplacement du chariot, et en utilisant une accélération dudit angle de ballant comme variable interne.

Selon une autre caractéristique, le procédé de régulation calcule l'angle de ballant à l'aide d'un processus itératif utilisant la vitesse dudit angle de ballant et de l'accélération dudit angle de ballant. Le procédé de régulation ne comporte pas d'étape préalable de modélisation. L'étape de calcul utilise un modèle mathématique de pendule avec amortissement.

D'autres caractéristiques et avantages vont apparaître dans la description détaillée qui suit en se référant à un mode de réalisation donné à titre d'exemple et représenté par les dessins annexés sur lesquels :

- la figure 1 montre un exemple connu d'un engin de levage d'une charge suspendue de type pont roulant,
- la figure 2 représente un schéma simplifié d'un dispositif de régulation conforme à l'invention du déplacement d'une charge selon un seul axe horizontal,
- la figure 3 représente un schéma simplifié d'un dispositif de régulation conforme à l'invention du déplacement d'une charge selon deux axes horizontaux.

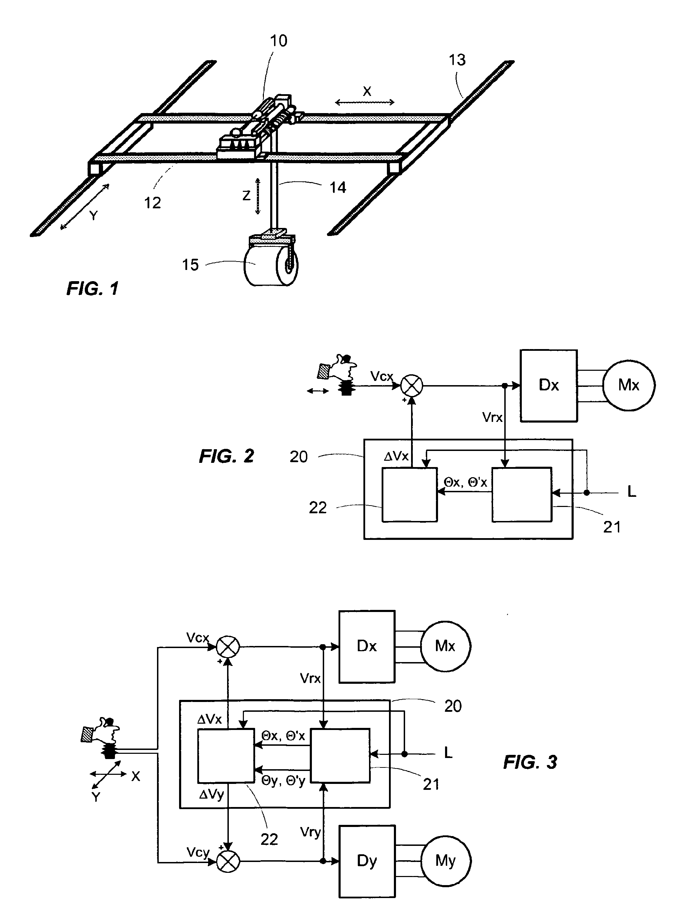

Le dispositif de régulation du déplacement d'une charge suspendue selon l'invention peut être mis en oeuvre dans un engin de levage tel que pont roulant, portique ou analogue. L'exemple de la figure 1 montre un engin de type pont roulant qui comporte un chariot 10. Le chariot 10 peut effectuer un premier mouvement selon un premier axe horizontal X. Ce premier mouvement, appelé mouvement de direction, s'effectue sur deux rails horizontaux 12. L'ensemble composé du chariot 10 et des rails 12 est mobile sur des rails 13 selon un second axe horizontal Y, perpendiculaire à l'axe de direction X, pour effectuer un mouvement appelé mouvement de translation. Par ailleurs, l'engin est capable d'effectuer un mouvement de levage selon un axe vertical Z pour soulever et descendre une charge 15 suspendue par un ou plusieurs câbles de levage 14 qui transitent par le chariot 10 et au bout desquels est associé un organe de suspension de la charge 15.

Le mouvement de direction selon l'axe X est effectué grâce à un moteur Mx piloté par un variateur de vitesse Dx qui reçoit une référence de vitesse Vrx (voir figure 2). De même, le mouvement de translation selon l'axe Y est effectué grâce à un moteur My piloté par un variateur de vitesse Dy qui reçoit une référence de vitesse Vry (voir figure 3). Le mouvement de levage selon l'axe Z est effectué grâce à un moteur de levage non représenté sur les figures qui permet d'enrouler et de dérouler les câbles de suspension. Ce moteur de levage peut être placé sur le chariot 10.

Le mouvement de direction X, respectivement de translation Y, est commandé par le conducteur de l'engin de levage, ce conducteur fournissant un signal de consigne de vitesse de direction Vcx, respectivement un signal de consigne de vitesse de translation Vcy, à l'aide par exemple de combinateur(s) - de type joystick, comme indiqué sur les figures 2 & 3. Néanmoins, dans certaines applications où les engins de levage seraient pilotés en automatique, on pourrait aussi envisager que les consignes de vitesse Vcx, Vcy proviennent directement d'un équipement d'automatisme.

A cause du mouvement de levage, la charge 15 suspendue par les câbles 14 présente évidemment une hauteur variable en fonction de la longueur L des câbles de suspension. Cette hauteur de suspension de la charge sera assimilée à la longueur des câbles L, à laquelle on pourrait éventuellement ajouter un offset représentant la distance entre l'extrémité basse des câbles 14 et la charge 15 (matérialisée par exemple par son centre de gravité).

En raison d'effets perturbateurs, principalement dus à l'accélération et au freinage du chariot 20 selon l'axe X et/ou selon l'axe Y, la charge 15 prend un mouvement pendulaire appelé ballant qui est défini par un angle de ballant noté Θx, respectivement Θy, que forment les câbles par rapport à la verticale dans le plan vertical passant par l'axe X, respectivement Y. Le but de l'invention est d'aider au pilotage de l'engin de levage en amortissant de façon simple et automatique le ballant selon l'axe X et/ou selon l'axe Y durant le déplacement de la charge 15, de façon transparente pour le conducteur de l'engin. Avantageusement, l'invention ne nécessite pas de phase d'apprentissage et ne nécessite pas de mesure de l'angle de ballant Θx et/ou Θy, de mesure du courant moteur ou du couple moteur qui peuvent s'avérer coûteuses et plus longues à mettre en oeuvre.

En référence au mode de réalisation de la figure 2, le dispositif de régulation 20 a pour but d'amortir le mouvement oscillant de la charge 15 uniquement lors de son déplacement d'une position à une autre selon l'axe X, ce déplacement pouvant évidemment être effectué en même temps qu'un mouvement de levage de la charge 15.

Le dispositif de régulation comporte des moyens de détermination d'une longueur L des câbles de suspension. Ces moyens de détermination comprennent par exemple un capteur ou codeur associé à l'arbre du moteur de levage ou au tambour d'enroulement des câbles. D'autres moyens sont également envisageables : par exemple les moyens de détermination de la longueur L pourraient également comporter simplement plusieurs fins de course répartis sur l'ensemble de la course des câbles, la longueur L étant alors déterminée par des valeurs paliers en fonction du déclenchement de ces fins de course. Cette solution est néanmoins moins précise évidemment.

Le dispositif de régulation comporte également des moyens de détermination d'une information représentative de la vitesse de déplacement $V_X$ du chariot 10 selon l'axe de direction X. Cette information représentative de la vitesse de déplacement $V_X$ du chariot selon l'axe X peut être déterminée de différentes façons :

- Selon une première variante, la vitesse de déplacement $V_X$ est obtenue par une mesure de la vitesse réelle de déplacement du chariot 10 selon l'axe X. Cette solution nécessite cependant l'utilisation d'un capteur de vitesse ou de déplacement du chariot selon l'axe X.
- Selon une deuxième variante, la vitesse de déplacement $V_X$ est obtenue directement par la référence de vitesse Vrx qui est fournie en entrée du variateur Dx en charge de piloter le moteur Mx entrainant le chariot 10 dans l'axe de direction X. On suppose dans ce cas que le variateur Dx assure le suivi de la référence vitesse avec une extrême rapidité. Cette solution est très simple à mettre en oeuvre car la référence de vitesse Vrx est facilement disponible.
- Selon une troisième variante, la vitesse de déplacement $V_X$ est obtenue par une estimation de vitesse élaborée dans le variateur de vitesse Dx en charge de piloter le moteur Mx. Dans certains cas, cette estimation de vitesse est en effet plus proche de la vitesse réelle que la référence de vitesse Vrx, à cause de phénomènes tels que écart de suivi de rampe ou phénomènes mécaniques. Cette solution peut donc être intéressante notamment pour une application utilisant un moteur conique. Le paramètre interne au variateur d'estimation de vitesse est souvent disponible sur une sortie analogique du variateur.

Le dispositif de régulation 20 comporte un module estimateur 21 relié à un module correcteur 22. Le module estimateur 21 reçoit en entrée la longueur L des câbles et la vitesse de déplacement $V_X$ du chariot selon l'axe de direction X. Il calcule un premier angle de ballant Θx selon l'axe X ainsi qu'une vitesse (ou variation) Θ'x de ce premier angle Θx. Les valeurs du premier angle de ballant Θx et de la vitesse Θ'x sont ensuite transmises au module correcteur 22 qui calcule et délivre en sortie un signal de correction ΔVx qui est additionné à la consigne de vitesse Vcx du mouvement de direction.

Pour calculer l'angle de ballant Θx et la vitesse Θ'x, l'invention prévoit que le procédé de régulation utilise un modèle mathématique de pendule avec amortissement, qui répond à l'équation suivante :

$$L * \Theta''x = -g * \sin\Theta x - V'x * \cos\Theta x + (Vz - K_f) * \Theta'x$$

dans lequel :

- L représente la longueur des câbles,
- Vz représente la vitesse du mouvement de levage, calculée comme étant la dérivée de longueur L,
- Θx représente le premier angle de ballant de la charge selon l'axe de direction X,
- Θ'x représente la vitesse de l'angle de ballant Θx (ou vitesse angulaire de la charge selon l'axe X),
- Θ''x représente l'accélération de l'angle de ballant Θx (ou accélération angulaire de la charge selon l'axe X),
- V'x représente l'accélération du mouvement de direction selon l'axe X, calculée comme étant la dérivée de la vitesse de déplacement déterminée $V_X$ selon l'axe X,
- $K_f$ représente un coefficient de frottement fixe,

- g représente la pesanteur.

On voit donc que le dispositif de régulation utilise l'accélération $\Theta''x$ de l'angle de ballant $\Theta x$ comme variable interne et que les seules variables d'entrée sont avantageusement la longueur des câbles L et la vitesse de déplacement Vx selon l'axe X.

L'équation ci-dessus fait intervenir le premier angle de ballant $\Theta x$, la dérivée première $\Theta'x$ de cet angle $\Theta x$ et la dérivée seconde $\Theta''x$ de cet angle $\Theta x$. Le premier angle de ballant $\Theta x$ est donc calculé à l'aide d'un processus itératif dans le temps qui utilise la vitesse $\Theta'x$ et l'accélération $\Theta''x$. Ce processus itératif peut se représenter à tout instant t de la façon suivante :

$$\Theta'x_t = \Theta'x_{t-1} + \Theta''x_{t-1} * \Delta t$$

$$\Theta x_t = \Theta x_{t-1} + \Theta'x_{t-1} * \Delta t$$

$$V'x_t = (Vx_t - Vx_{t-1}) / \Delta t$$

$$Vz_t = (L_t - L_{t-1}) / \Delta t$$

$$\Theta''x_t = (- g * \sin\Theta x_t - V'x_t * \cos\Theta x_t + (Vz_t - K_f) * \Theta'x_t) / L_t$$

dans lesquelles $\Theta x_t$ et $\Theta x_{t-1}$ représentent l'angle de ballant selon l'axe de direction X respectivement à un instant t et à un instant précédent t-1, $\Theta'x_t$ et $\Theta'x_{t-1}$ représentent la vitesse de l'angle de ballant $\Theta x$ respectivement aux instants t et t-1, $\Theta''x_t$ et $\Theta''x_{t-1}$ représentent l'accélération de l'angle de ballant $\Theta x$ respectivement aux instants t et t-1, $V'x_t$ représente l'accélération du mouvement de direction à l'instant t, $Vx_t$ et $Vx_{t-1}$ représentent la vitesse de déplacement selon l'axe X respectivement aux instants t et t-1, $Vz_t$ représente la vitesse du mouvement de levage à l'instant t, $L_t$ et $L_{t-1}$ représentent la longueur des câbles respectivement aux instants t et t-1 et $\Delta t$ représente l'écart de temps entre l'instant t et l'instant t-1.

Le processus itératif part de l'hypothèse qu'au démarrage du mouvement de direction, les valeurs de $\Theta x$, $\Theta'x$ et $\Theta''x$ sont nulles, c'est-à-dire qu'à l'instant t = 0, on a : $\Theta x_0 = \Theta'x_0 = \Theta''x_0 = 0$.

En référence au mode de réalisation de la figure 3, le dispositif de régulation 20 a pour but d'amortir le mouvement oscillant de la charge 15 lors de son déplacement selon l'axe de direction X et l'axe de translation Y, les déplacements suivant les axes X et Y pouvant évidemment être commandés simultanément par le conducteur et être effectués en même temps qu'un mouvement de levage de la charge.

Dans ce cas, le module estimateur 21 du dispositif de régulation 20 reçoit en entrée la longueur L des câbles, la vitesse $V_X$ du chariot selon l'axe de direction X ainsi que la vitesse $V_Y$ du chariot selon l'axe de translation Y, déterminées par les moyens de détermination. Préférentiellement, les vitesses du chariot $V_X$ et $V_Y$ sont obtenues directement par les références de vitesse Vrx, respectivement Vry, fournies en entrée des variateurs Dx, respectivement Dy. Mais elles pourraient aussi être obtenues à partir d'estimations ou de mesures de la vitesse réelle de direction du chariot 10 selon l'axe X et de la vitesse réelle de translation du chariot 10 selon l'axe Y.

En plus de $\Theta x$ et $\Theta'x$, le module estimateur 21 calcule également un second angle de ballant $\Theta y$ selon l'axe Y et une vitesse $\Theta'y$ de cet angle $\Theta y$. Les valeurs du second angle de ballant $\Theta y$ et de la vitesse $\Theta'y$ sont transmises au module correcteur 22 qui calcule et délivre en sortie un signal de correction $\Delta Vy$ qui est additionné à la consigne de vitesse Vcy du mouvement de translation.

Le procédé de régulation utilise donc deux modèles de pendule avec amortissement similaires et indépendants pour les axes X et Y :

$$L * \Theta''x = - g * \sin\Theta x - V'x * \cos\Theta x + (Vz - K_{fx}) * \Theta'x$$

$$L * \Theta''y = - g * \sin\Theta y - V'y * \cos\Theta y + (Vz - K_{fy}) * \Theta'y$$

dans lequel :

- L représente la longueur des câbles, Vz représente la vitesse du mouvement de levage calculée comme étant la dérivée de la longueur L,
- $\Theta x$ représente le premier angle de ballant selon l'axe de direction X, $\Theta 'x$ représente la vitesse de l'angle de ballant $\Theta x$, $\Theta ''x$ représente l'accélération de l'angle de ballant $\Theta x$,
- $\Theta y$ représente le second angle de ballant selon l'axe de translation Y, $\Theta 'y$ représente la vitesse de l'angle de ballant $\Theta y$, $\Theta ''y$ représente l'accélération de l'angle de ballant $\Theta y$,
- V'x représente l'accélération du mouvement de direction selon l'axe X calculée comme étant la dérivée de la vitesse de déplacement déterminée Vx selon l'axe X,
- V'y représente l'accélération du mouvement de translation selon l'axe Y calculée comme étant la dérivée de la vitesse de déplacement déterminée $V_Y$ selon l'axe Y,
- $K_{fx}$ et $K_{fy}$ représentent des coefficients de frottements fixes mais qui peuvent être différents l'un de l'autre,
- g représente la pesanteur.

On suppose qu'au démarrage du mouvement de direction, respectivement du mouvement de translation, les valeurs $\Theta x$, $\Theta 'x$, $\Theta ''x$, respectivement $\Theta y$, $\Theta 'y$, $\Theta ''y$, sont nulles. Comme indiqué précédemment dans le cas du mouvement $\Theta x$ seul, les équations ci-dessus font intervenir la dérivée première et la dérivée seconde de l'angle de ballant, utilisant donc un processus qui est itératif dans le temps, c'est-à-dire que les résultats sont recalculés de façon périodique à chaque instant t, en utilisant notamment les résultats obtenus à l'instant précédent t-1.

Ainsi, l'invention permet au module estimateur 21 de connaître en temps réel des valeurs estimées de l'angle de ballant et de la vitesse de cet angle selon l'un et/ou l'autre des axes X et Y. Ces estimations sont transmises au module correcteur 22 qui leur applique un coefficient de correction $K_\Theta$, respectivement $K'_\Theta$, pour fournir les signaux de correction $\Delta Vx$ et/ou $\Delta Vy$, selon les équations suivantes :

$$\Delta Vx = K_{\Theta x} * \Theta x + K'_{\Theta x} * \Theta 'x \qquad et \qquad \Delta Vy = K_{\Theta y} * \Theta y + K'_{\Theta y} * \Theta 'y$$

dans lequel : $K_{\Theta x}$ et $K_{\Theta y}$ sont les coefficients correcteurs appliqués respectivement aux angles de ballant $\Theta x$ et $\Theta y$ pour les axes X et Y, $K'_{\Theta x}$ et $K'_{\Theta y}$ sont les coefficients correcteurs appliqués respectivement aux vitesses des angles de ballant $\Theta 'x$ et $\Theta 'y$ pour les axes X et Y, $\Delta Vx$ et $\Delta Vy$ sont les signaux de correction à appliquer respectivement aux consignes de vitesse Vcx et Vcy selon l'axe X et Y.

La référence de vitesse Vrx appliquée en entrée du variateur Dx pilotant le moteur de direction Mx est donc égale à : Vrx = Vcx + $\Delta Vx$. De même, la référence de vitesse Vry appliquée en entrée du variateur Dy pilotant le moteur de translation My est égale à : Vry = Vcy + $\Delta Vy$.

Selon un premier mode simplifié, les valeurs des coefficients de correction $K_\Theta$, $K'_\Theta$ sont fixes. Selon un second mode de réalisation préféré, les valeurs des coefficients de correction $K_\Theta$, $K'_\Theta$ peuvent être modifiables en fonction de la longueur L des câbles déterminée par le dispositif 20, de façon à optimiser les corrections de vitesse à apporter suivant la hauteur du pendule formé par la charge 15. Le module correcteur 22 est donc capable de mémoriser plusieurs valeurs de $K_\Theta$, $K'_\Theta$ suivant la longueur L.

Vu sa simplicité, le dispositif de régulation décrit peut facilement être intégré dans un automate programmable chargé de piloter et surveiller les mouvements d'un engin de levage. Il peut aussi être implanté directement dans chaque variateur de vitesse Dx et Dy pilotant les mouvements du chariot selon l'axe X et Y.

Le dispositif décrit permet de mettre en oeuvre un procédé de régulation du déplacement de la charge 15 selon un ou plusieurs axes horizontaux X, Y. Le procédé de régulation comporte une étape de calcul, effectuée par le module estimateur 21, permettant de déterminer un angle de ballant $\Theta x$, $\Theta y$ selon les axes X, Y et une vitesse $\Theta 'x$, $\Theta 'y$ de cet angle de ballant. L'étape de calcul utilise directement un modèle de pendule avec amortissement et nécessite uniquement de connaître comme seules variables d'entrée la longueur L des câbles de suspension 14 de la charge 15 et la vitesse $V_X$, Vy de déplacement du chariot selon les axes X, Y.

Avantageusement, le procédé ne comporte donc aucune étape préalable de modélisation, qui nécessiterait de connaître d'autres paramètres variables tels qu'une mesure de l'angle de ballant ou une mesure du courant circulant dans le moteur, dans le but de déterminer ou d'affiner un modèle mathématique particulier ou dans le but d'établir une fonction de transfert entre la vitesse du chariot et l'angle de ballant mesuré par un capteur pour une longueur de câbles donnée.

Le procédé de régulation comporte ensuite une étape de correction, effectuée par le module correcteur 22 du dispositif de régulation 20. L'étape de correction utilise la valeur calculée de l'angle de ballant $\Theta x$ et de la vitesse $\Theta 'x$ de l'angle de ballant, pour fournir un signal de correction de vitesse $\Delta Vx$ qui sera introduit en complément d'une éventuelle

**EP 2 219 988 B1**

consigne de vitesse Vcx en tant que référence de vitesse Vrx fournie en entrée du variateur de vitesse Dx pilotant le moteur de direction X du chariot Mx. De même, l'étape de correction utilise la valeur calculée de l'angle de ballant Θy et de la vitesse Θ'y de l'angle de ballant, pour fournir un signal de correction de vitesse ΔVy qui sera introduit en complément d'une éventuelle consigne de vitesse Vcy en tant que référence de vitesse Vry fournie en entrée du variateur de vitesse Dy pilotant le moteur de translation Y du chariot My.

**Revendications**

1.  Dispositif de régulation du déplacement d'une charge (15) suspendue par câbles à un chariot (10) qui est mobile selon un premier axe horizontal (X) dans un engin de levage, le dispositif comprenant des moyens de détermination d'une longueur (L) des câbles de suspension (14) de la charge (15) et des moyens de détermination d'une information représentative d'une vitesse de déplacement ($V_X$) du chariot (10) selon le premier axe (X), **caractérisé en ce que** le dispositif de régulation (20) calcule un premier angle de ballant (Θx) de la charge (15) et une vitesse (Θ'x) dudit premier angle de ballant (Θx) en utilisant uniquement ladite longueur (L) et ladite information représentative de la vitesse de déplacement ($V_X$) selon le premier axe (X) comme seules variables d'entrée, et en utilisant une accélération (Θ"x) dudit premier angle de ballant (Θx) comme variable interne.

2.  Dispositif de régulation selon la revendication 1, **caractérisé en ce que** le dispositif de régulation (20) calcule le premier angle de ballant (Θx) à l'aide d'un processus itératif utilisant la vitesse (Θ'x) dudit premier angle de ballant (Θx) et de l'accélération (Θ"x) dudit premier angle de ballant (Θx).

3.  Dispositif de régulation selon la revendication 1, **caractérisé en ce que** l'information représentative de la vitesse de déplacement ($V_X$) du chariot selon le premier axe (X) est déterminée en utilisant une référence de vitesse (Vrx) qui est fournie à un variateur de vitesse (Dx) pilotant le déplacement du chariot (10) selon le premier axe (X).

4.  Dispositif de régulation selon la revendication 1, **caractérisé en ce que** l'information représentative de la vitesse de déplacement ($V_x$) du chariot selon le premier axe (X) est déterminée en utilisant une estimation de vitesse qui est élaborée par un variateur de vitesse (Dx) pilotant le déplacement du chariot (10) selon le premier axe (X).

5.  Dispositif de régulation selon la revendication 1, **caractérisé en ce que** le dispositif de régulation délivre un signal de correction (ΔVx) qui est ajouté à une consigne de vitesse (Vcx) pour fournir une référence de vitesse (Vrx) de déplacement du chariot (10) selon le premier axe (X), le signal de correction (ΔVx) étant calculé en appliquant un coefficient de correction ($K_{Θx}$, $K'_{Θx}$) au premier angle de ballant calculé (Θx) et à la vitesse calculée (Θ'x) du premier angle de ballant (Θx).

6.  Dispositif de régulation selon la revendication 1, dans lequel le chariot (10) est également mobile selon un second axe horizontal (Y) perpendiculaire au premier axe (X), et comportant des moyens pour déterminer une information représentative d'une vitesse de déplacement ($V_Y$) du chariot (10) selon le second axe (Y), **caractérisé en ce que** le dispositif de régulation (20) calcule un second angle de ballant (Θy) de la charge (15) et une vitesse (Θ'y) dudit second angle de ballant (Θy) en utilisant uniquement ladite longueur (L) et ladite information représentative de la vitesse de déplacement ($V_Y$) selon le second axe (Y) comme seules variables d'entrée, et en utilisant une accélération (Θ"y) dudit second angle de ballant (Θy) comme variable interne.

7.  Dispositif de régulation selon la revendication 6, **caractérisé en ce que** le dispositif de régulation (20) calcule le second angle de ballant (Θy) à l'aide d'un processus itératif utilisant la vitesse (Θ'y) dudit second angle de ballant (Θy) et de l'accélération (Θ"y) dudit second angle de ballant (Θy).

8.  Dispositif de régulation selon la revendication 6, **caractérisé en ce que** l'information représentative de la vitesse de déplacement ($V_Y$) du chariot selon le second axe (Y) est déterminée en utilisant une référence de vitesse (Vry) de déplacement du chariot selon le second axe (Y).

9.  Dispositif de régulation selon la revendication 6, **caractérisé en ce que** l'information représentative de la vitesse de déplacement ($V_Y$) du chariot selon le second axe (Y) est déterminée en utilisant une mesure de vitesse de déplacement du chariot (10) selon le second axe (Y).

10. Dispositif de régulation selon la revendication 6, **caractérisé en ce que** dispositif de régulation délivre un signal de correction (ΔVy) qui est ajouté à une consigne de vitesse (Vcy) pour fournir une référence de vitesse (Vry) de déplacement du chariot (10) selon le second axe (Y), le signal de correction ($\Delta$Vy) étant calculé en appliquant un coefficient de correction ($K_{\Theta y}$, $K'_{\Theta y}$) au second angle de ballant calculé ($\Theta$y) et à la vitesse calculée ($\Theta$'y) du second angle de ballant ($\Theta$y).

11. Dispositif de régulation selon la revendication 5 ou 10, **caractérisé en ce que** les coefficients de correction ($K_{\Theta x}$, $K'_{\Theta x}$, $K_{\Theta y}$, $K'_{\Theta y}$) sont variables en fonction de la longueur (L) des câbles de suspension (14) de la charge (15).

12. Procédé de régulation du déplacement d'une charge (15) suspendue par câbles à un chariot (10) qui est mobile selon au moins un axe horizontal (X, Y) dans un engin de levage, le procédé étant mis en oeuvre au moyen d'un dispositif de régulation (20) selon l'une des revendications précédentes, **caractérisé en ce que** le procédé de régulation comporte une étape de calcul permettant de déterminer un angle de ballant ($\Theta$x, $\Theta$y) de la charge (15) et une vitesse ($\Theta$'x, $\Theta$'y) de l'angle de ballant en utilisant uniquement comme seules variables d'entrée une longueur (L) des câbles de suspension (14) de la charge (15) et une information représentative d'une vitesse ($V_X$, Vy) de déplacement du chariot, et en utilisant une accélération ($\Theta$"x, $\Theta$"y) dudit angle de ballant ($\Theta$x, $\Theta$y) comme variable interne.

13. Procédé de régulation selon la revendication 12, **caractérisé en ce que** le procédé de régulation calcule l'angle de ballant ($\Theta$x, $\Theta$y) à l'aide d'un processus itératif utilisant la vitesse ($\Theta$'x, $\Theta$'y) dudit angle de ballant ($\Theta$x, $\Theta$y) et de l'accélération ($\Theta$"x, $\Theta$"y) dudit angle de ballant ($\Theta$x, $\Theta$y).

14. Procédé de régulation selon la revendication 12, **caractérisé en ce que** la vitesse ($V_X$, $V_y$) de déplacement du chariot est déterminée à partir d'une référence de vitesse (Vrx, Vry) de déplacement du chariot.

15. Procédé de régulation selon la revendication 12, **caractérisé en ce que** le procédé de régulation comporte une étape de correction permettant de fournir un signal de correction de vitesse ($\Delta$Vx, $\Delta$Vy) à partir des valeurs déterminées de l'angle de ballant ($\Theta$x, $\Theta$y) et de la vitesse ($\Theta$'x, $\Theta$'y) de l'angle de ballant, le signal de correction ($\Delta$Vx, $\Delta$Vy) étant calculé en appliquant un coefficient de correction ($K_{\Theta x}$, $K'_{\Theta x}$, $K_{\Theta y}$, $K'_{\Theta y}$) à l'angle de ballant calculé ($\Theta$x, $\Theta$y) et à la vitesse calculée ($\Theta$'x, $\Theta$'y) de l'angle de ballant.

16. Procédé de régulation selon la revendication 15, **caractérisé en ce que** les coefficients de correction ($K_{\Theta x}$, $K'_{\Theta x}$, $K_{\Theta y}$, $K'_{\Theta y}$) sont variables en fonction de la longueur (L) des câbles de suspension (14) de la charge (15).

17. Procédé de régulation selon la revendication 12, **caractérisé en ce que** l'étape de calcul utilise un modèle mathématique de pendule avec amortissement.

**Claims**

1. Device for regulating the displacement of a load (15) suspended by cables from a trolley (10) which can move along to a first horizontal axis (X) in a hoisting appliance, the device comprising means for determining a length (L) of the cables (14) suspending the load (15) and means for determining information representative of a speed of displacement ($V_X$) of the trolley (10) along the first axis (X), **characterized in that** the regulation device (20) calculates a first sway angle ($\Theta$x) of the load (15) and a speed ($\Theta$'x) of said first sway angle ($\Theta$x) by using only said length (L) and said information representative of the speed of displacement ($V_X$) along the first axis (X) as the only input variables, and by using an acceleration ($\Theta$"x) of said first sway angle ($\Theta$x) as internal variable.

2. Regulation device according to Claim 1, **characterized in that** the regulation device (20) calculates the first sway angle ($\Theta$x) by an iterative process using the speed ($\Theta$'x) of said first sway angle ($\Theta$x) and the acceleration ($\Theta$"x) of said first sway angle ($\Theta$x).

3. Regulation device according to Claim 1, **characterized in that** the information representative of the speed of displacement ($V_X$) of the trolley along the first axis (X) is determined by using a speed reference (Vrx) which is supplied to a variable speed drive (Dx) driving the displacement of the trolley (10) along the first axis (X).

4. Regulation device according to Claim 1, **characterized in that** the information representative of the speed of displacement ($V_X$) of the trolley along the first axis (X) is determined by using a speed estimation which is generated by a variable speed drive (Dx) driving the displacement of the trolley (10) along the first axis (X).

5. Regulation device according to Claim 1, **characterized in that** the regulation device delivers a correction signal ($\Delta Vx$) which is added to a speed setpoint (Vcx) to supply a displacement speed reference (Vrx) of the trolley (10) along the first axis (X), the correction signal ($\Delta Vx$) being calculated by applying a correction coefficient ($K_{\Theta x}$, $K'_{\Theta x}$) to the calculated first sway angle ($\Theta x$) and to the calculated speed ($\Theta'x$) of the first sway angle ($\Theta x$).

6. Regulation device according to Claim 1, in which the trolley (10) can also move along a second horizontal axis (Y) perpendicular to the first axis (X), and comprising means for determining information representative of a speed of displacement ($V_Y$) of the trolley (10) along the second axis (Y), **characterized in that** the regulation device (20) calculates a second sway angle ($\Theta y$) of the load (15) and a speed ($\Theta'y$) of said second sway angle ($\Theta y$) by using only said length (L) and said information representative of the speed of displacement ($V_Y$) along the second axis (Y) as the only input variables, and by using an acceleration ($\Theta''y$) of said second sway angle ($\Theta y$) as internal variable.

7. Regulation device according to Claim 6, **characterized in that** the regulation device (20) calculates the second sway angle ($\Theta y$) by an iterative process using the speed ($\Theta'y$) of said second sway angle ($\Theta y$) and the acceleration ($\Theta''y$) of said second sway angle ($\Theta y$).

8. Regulation device according to Claim 6, **characterized in that** the information representative of the speed of displacement ($V_Y$) of the trolley along the second axis (Y) is determined by using a displacement speed reference (Vry) of the trolley along the second axis (Y).

9. Regulation device according to Claim 6, **characterized in that** the information representative of the speed of displacement ($V_Y$) of the trolley along the second axis (Y) is determined by using a measurement of the speed of displacement of the trolley (10) along the second axis (Y).

10. Regulation device according to Claim 6, **characterized in that** the regulation device delivers a correction signal ($\Delta Vy$) which is added to a speed setpoint (Vcy) to supply a displacement speed reference (Vry) of the trolley (10) along the second axis (Y), the correction signal ($\Delta Vy$) being calculated by applying a correction coefficient ($K_{\Theta y}$, $K'_{\Theta y}$) to the calculated second sway angle ($\Theta y$) and to the calculated speed ($\Theta'y$) of the second sway angle ($\Theta y$).

11. Regulation device according to Claim 5 or 10, **characterized in that** the correction coefficients ($K_{\Theta x}$, $K'_{\Theta x}$, $K_{\Theta y}$, $K'_{\Theta y}$) are variable depending on the length (L) of the cables (14) suspending the load (15).

12. Method of regulating the displacement of a load (15) suspended by cables from a trolley (10) which can move along at least one horizontal axis (X, Y) in a hoisting appliance, the method being implemented by means of a regulation device (20) according to one of the preceding claims, **characterized in that** the regulation method comprises a calculation step for determining a sway angle ($\Theta x$, $\Theta y$) of the load (15) and a speed ($\Theta'x$, $\Theta'y$) of the sway angle by using as the only input variables a length (L) of the cables (14) suspending the load (15) and information representative of a speed ($V_X$, Vy) of displacement of the trolley, and by using an acceleration ($\Theta''x$, $\Theta''y$) of said sway angle ($\Theta x$, $\Theta y$) as input variable.

13. Regulation method according to Claim 12, **characterized in that** the regulation method calculates the sway angle ($\Theta x$, $\Theta y$) by an iterative process using the speed ($\Theta'x$, $\Theta'y$) of said sway angle ($\Theta x$, $\Theta y$) and the acceleration ($\Theta''x$, $\Theta''y$) of said sway angle ($\Theta x$, $\Theta y$).

14. Regulation method according to Claim 12, **characterized in that** the speed ($V_X$, Vy) of displacement of the trolley is determined from a displacement speed reference (Vrx, Vry) of the trolley.

15. Regulation method according to Claim 12, **characterized in that** the regulation method comprises a correction step for supplying a speed correction signal ($\Delta Vx$, $\Delta Vy$) based on the determined values of the sway angle ($\Theta x$, $\Theta y$) and of the speed ($\Theta'x$, $\Theta'y$) of the sway angle, the correction signal ($\Delta Vx$, $\Delta Vy$) being calculated by applying a correction coefficient ($K_{\Theta x}$, $K'_{\Theta x}$, $K_{\Theta y}$, $K'_{\Theta y}$) to the calculated sway angle ($\Theta x$, $\Theta y$) and to the calculated speed ($\Theta'x$, $\Theta'y$) of the sway angle.

16. Regulation method according to Claim 15, **characterized in that** the correction coefficients ($K_{\Theta x}$, $K'_{\Theta x}$, $K_{\Theta y}$, $K'_{\Theta y}$) are variable according to the length (L) of the cables (14) suspending the load (15).

17. Regulation method according to Claim 12, **characterized in that** the calculation step uses a damped pendulum mathematical model.

**Patentansprüche**

1. Vorrichtung zur Einstellung der Verschiebung einer Last (15), die über Kabel an einer Laufkatze (10) hängt, welche gemäß einer ersten waagrechten Achse (X) in einem Hebegerät beweglich ist, wobei die Vorrichtung Einrichtungen zur Bestimmung einer Länge (L) der Aufhängekabel (14) der Last (15) und Einrichtungen zur Bestimmung einer Information enthält, die für eine Verschiebegeschwindigkeit ($V_x$) der Laufkatze (10) entlang der ersten Achse (X) repräsentativ ist, **dadurch gekennzeichnet, dass** die Einstellvorrichtung (20) einen ersten Baumelwinkel ($\Theta x$) der Last (15) und eine Geschwindigkeit ($\Theta'x$) des ersten Baumelwinkels ($\Theta x$) berechnet, indem sie nur die Länge (L) und die für die Verschiebegeschwindigkeit ($V_x$) entlang der ersten Achse (X) repräsentative Information als einzige Eingangsvariablen verwendet, und indem sie eine Beschleunigung ($\Theta''x$) des ersten Baumelwinkels ($\Theta x$) als interne Variable verwendet.

2. Einstellvorrichtung nach Anspruch 1, **dadurch gekennzeichnet, dass** die Einstellvorrichtung (20) den ersten Baumelwinkel ($\Theta x$) mit Hilfe eines iterativen Prozesses berechnet, der die Geschwindigkeit ($\Theta'x$) des ersten Baumelwinkels ($\Theta x$) und die Beschleunigung ($\Theta''x$) des ersten Baumelwinkels ($\Theta x$) verwendet.

3. Einstellvorrichtung nach Anspruch 1, **dadurch gekennzeichnet, dass** die für die Verschiebegeschwindigkeit ($V_x$) der Laufkatze entlang der ersten Achse (X) repräsentative Information unter Verwendung eines Geschwindigkeitsrichtwerts (Vrx) bestimmt wird, der an einen Geschwindigkeitsregler (Dx) geliefert wird, welcher die Verschiebung der Laufkatze (10) entlang der ersten Achse (X) steuert.

4. Einstellvorrichtung nach Anspruch 1, **dadurch gekennzeichnet, dass** die für die Verschiebegeschwindigkeit ($V_x$) der Laufkatze entlang der ersten Achse (X) repräsentative Information unter Verwendung einer Geschwindigkeitsschätzung bestimmt wird, die von einem Geschwindigkeitsregler (Dx) erarbeitet wird, der die Verschiebung der Laufkatze (10) entlang der ersten Achse (X) steuert.

5. Einstellvorrichtung nach Anspruch 1, **dadurch gekennzeichnet, dass** die Einstellvorrichtung ein Korrektursignal ($\Delta Vx$) liefert, das zu einem Geschwindigkeitssollwert (Vcx) hinzugefügt wird, um einen Geschwindigkeitsrichtwert (Vrx) der Verschiebung der Laufkatze (10) entlang der ersten Achse (X) zu liefern, wobei das Korrektursignal ($\Delta Vx$) unter Anwendung eines Korrekturkoeffizienten ($K_{\Theta x}$, $K'_{\Theta x}$) an den ersten berechneten Baumelwinkel ($\Theta x$) und an die berechnete Geschwindigkeit ($\Theta'x$) des ersten Baumelwinkels ($\Theta x$) berechnet wird.

6. Einstellvorrichtung nach Anspruch 1, bei der die Laufkatze (10) ebenfalls entlang einer zweiten waagrechten Achse (Y) lotrecht zur ersten Achse (X) beweglich ist und Einrichtungen aufweist, um eine für eine Verschiebegeschwindigkeit ($V_y$) der Laufkatze (10) entlang der zweiten Achse (Y) repräsentative Information zu bestimmen, **dadurch gekennzeichnet, dass** die Einstellvorrichtung (20) einen zweiten Baumelwinkel ($\Theta y$) der Last (15) und eine Geschwindigkeit ($\Theta'y$) des zweiten Baumelwinkels ($\Theta y$) unter Verwendung nur der Länge (L) und der für die Verschiebegeschwindigkeit ($V_y$) entlang der zweiten Achse (Y) repräsentativen Information als einzige Eingangsvariablen und unter Verwendung einer Beschleunigung ($\Theta''y$) des zweiten Baumelwinkels ($\Theta y$) als interne Variable berechnet.

7. Einstellvorrichtung nach Anspruch 6, **dadurch gekennzeichnet, dass** die Einstellvorrichtung (20) den zweiten Baumelwinkel ($\Theta y$) mit Hilfe eines iterativen Prozesses unter Verwendung der Geschwindigkeit ($\Theta'y$) des zweiten Baumelwinkels ($\Theta y$) und der Beschleunigung ($\Theta''y$) des zweiten Baumelwinkels ($\Theta y$) berechnet.

8. Einstellvorrichtung nach Anspruch 6, **dadurch gekennzeichnet, dass** die für die Verschiebegeschwindigkeit ($V_y$) der Laufkatze entlang der zweiten Achse (Y) repräsentative Information unter Verwendung eines Geschwindigkeitsrichtwerts (Vry) der Verschiebung der Laufkatze entlang der zweiten Achse (Y) bestimmt wird.

9. Einstellvorrichtung nach Anspruch 6, **dadurch gekennzeichnet, dass** die für die Verschiebegeschwindigkeit ($V_y$) der Laufkatze entlang der zweiten Achse (Y) repräsentative Information unter Verwendung eines Geschwindigkeitsmesswerts der Verschiebung der Laufkatze (10) entlang der zweiten Achse (Y) bestimmt wird.

10. Einstellvorrichtung nach Anspruch 6, **dadurch gekennzeichnet, dass** die Einstellvorrichtung ein Korrektursignal ($\Delta Vy$) liefert, das zu einem Geschwindigkeitssollwert (Vcy) hinzugefügt wird, um einen Geschwindigkeitsrichtwert (Vry) der Verschiebung der Laufkatze (10) entlang der zweiten Achse (Y) zu liefern, wobei das Korrektursignal ($\Delta Vy$) unter Anwendung eines Korrekturkoeffizienten ($K_{\Theta y}$, $K'_{\Theta y}$) an den zweiten berechneten Baumelwinkel ($\Theta y$) und an die berechnete Geschwindigkeit ($\Theta'y$) des zweiten Baumelwinkels ($\Theta y$) berechnet wird.

**11.** Einstellvorrichtung nach Anspruch 5 oder 10, **dadurch gekennzeichnet, dass** die Korrekturkoeffizienten ($K_{\Theta x}$, $K'_{\Theta x}$, $K_{\Theta y}$, $K'_{\Theta y}$) abhängig von der Länge (L) der Aufhängekabel (14) der Last (15) variabel sind.

**12.** Verfahren zur Einstellung der Verschiebung einer Last (15), die über Kabel an einer Laufkatze (10) hängt, welche gemäß mindestens einer waagrechten Achse (X, Y) in einem Hebegerät beweglich ist, wobei das Verfahren mittels einer Einstellvorrichtung (20) nach einem der vorhergehenden Ansprüche durchgeführt wird, **dadurch gekennzeichnet, dass** das Einstellverfahren einen Rechenschritt enthält, der es ermöglicht, einen Baumelwinkel ($\Theta x$, $\Theta y$) der Last (15) und eine Geschwindigkeit ($\Theta' x$, $\Theta' y$) des Baumelwinkels unter Verwendung als einzigen Eingangsvariablen nur einer Länge (L) der Aufhängekabel (14) der Last (15) und einer für eine Verschiebegeschwindigkeit ($V_x$, $V_y$) der Laufkatze repräsentativen Information, und unter Verwendung einer Beschleunigung ($\Theta'' x$, $\Theta'' y$) des Baumelwinkels ($\Theta x$, $\Theta y$) als innere Variable zu bestimmen.

**13.** Einstellverfahren nach Anspruch 12, **dadurch gekennzeichnet, dass** das Einstellverfahren den Baumelwinkel ($\Theta x$, $\Theta y$) mit Hilfe eines iterativen Prozesses berechnet, der die Geschwindigkeit ($\Theta' x$, $\Theta' y$) des Baumelwinkels ($\Theta x$, $\Theta y$) und die Beschleunigung ($\Theta'' x$, $\Theta'' y$) des Baumelwinkels ($\Theta x$, $\Theta y$) verwendet.

**14.** Einstellverfahren nach Anspruch 12, **dadurch gekennzeichnet, dass** die Verschiebegeschwindigkeit ($V_x$, $V_y$) der Laufkatze ausgehend von einem Geschwindigkeitsrichtwert (Vrx, Vry) der Verschiebung der Laufkatze bestimmt wird.

**15.** Einstellverfahren nach Anspruch 12, **dadurch gekennzeichnet, dass** das Einstellverfahren einen Korrekturschritt aufweist, der es ermöglicht, ein Geschwindigkeitskorrektursignal ($\Delta Vx$, $\Delta Vy$) ausgehend von den bestimmten Werten des Baumelwinkels ($\Theta x$, $\Theta y$) und der Geschwindigkeit ($\Theta' x$, $\Theta' y$) des Baumelwinkels zu liefern, wobei das Korrektursignal ($\Delta Vx$, $\Delta Vy$) unter Anwendung eines Korrekturkoeffizienten ($K_{\Theta x}$, $K'_{\Theta x}$, $K_{\Theta y}$, $K'_{\Theta y}$) an den berechneten Baumelwinkel ($\Theta x$, $\Theta y$) und an die berechnete Geschwindigkeit ($\Theta' x$, $\Theta' y$) des Baumelwinkels berechnet wird.

**16.** Einstellverfahren nach Anspruch 15, **dadurch gekennzeichnet, dass** die Korrekturkoeffizienten ($K_{\Theta x}$, $K'_{\Theta x}$, $K_{\Theta y}$, $K'_{\Theta y}$) abhängig von der Länge (L) der Aufhängekabel (14) der Last (15) variabel sind.

**17.** Einstellverfahren nach Anspruch 12, **dadurch gekennzeichnet, dass** der Rechenschritt ein mathematisches Modell eines Pendels mit Dämpfung verwendet.

**FIG. 1**

**FIG. 2**

**FIG. 3**

## RÉFÉRENCES CITÉES DANS LA DESCRIPTION

**Documents brevets cités dans la description**

- FR 2698344
- FR 2775678
- US 5443566 A
- US 5219420 A